# EUROPÄISCHE PATENTSCHRIFT

(11) **EP 4 142 146 B1**
(45) Veröffentlichungstag und Bekanntmachung des Hinweises auf die Patenterteilung: **23.04.2025**
(21) Anmeldenummer: 22186135.4
(22) Anmeldetag: 21.07.2022
(51) Int. Cl.: H02P 29/60, H02P 27/08, H02P 29/024, H02P 7/03, H02P 6/08, H02P 5/74, D06F 37/30

(54) **ANTRIEBSSYSTEM**
DRIVE SYSTEM
SYSTÈME D'ENTRAÎNEMENT

(30) Priorität: 17.08.2021 BE 202105654
(43) Veröffentlichungstag der Anmeldung: 01.03.2023
(73) Patentinhaber: Miele & Cie. KG, 33332 Gütersloh (DE)
(72) Erfinder: Neufeld, Alexander, 33619 Bielefeld (DE); Rodehüser, Tobias, 59329 Wadersloh (DE)

(56) Entgegenhaltungen:
- DE-A1- 102017 214 133
- US-A1- 2011 044 669
- US-A1- 2021 001 814

## Beschreibung

Die Erfindung betrifft ein Antriebssystem gemäß dem Oberbegriff des Patentanspruchs 1 sowie ein Haushaltsgerät mit einem derartigen Antriebssystem gemäß dem Patentanspruch 9.

Zu den bekannten elektrischen Motoren gehören auch die Synchronmotoren, welche einphasig mit Wechselstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Dies kann das Drehverhalten des Synchronmotors z.B. beim Anlauf sowie in Abhängigkeit der anzutreibenden Last gezielt beeinflussen.

Nachteilig ist hierbei, dass derartige Frequenzumrichter zusätzliche Kosten verursachen und zusätzlichen Bauraum benötigen können. Neben dem Frequenzumrichter selbst können diese Kosten auch durch weitere Elektronik im Antriebssystem entstehen.

Als kostengünstige Alternative zu mittels Frequenzumrichtern betriebenen Synchronmotoren ist es bei einfachen Anwendungen wie z.B. bei Laugenpumpen in Waschmaschinen bekannt, ungeregelte Einphasen-Synchronmotoren als Antriebe z.B. von Laugenpumpen einzusetzen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt, ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine H-Brücke ausreichend, welche von einer Steuerungseinheit betrieben werden kann. Dies kommt insbesondere einfachen Anwendungen ungeregelt mit konstanter Drehzahl wie z.B. bei Laugenpumpen in Waschmaschinen zugute.

Wird in einem Gerät wenigstens ein derartiger Einphasen-Synchronmotor oder auch ein anderer Einphasen-Wechselstrommotor verwendet, welcher thermisch nicht eigensicher ist, d.h. welcher durch entsprechend starke Bestromung thermisch überlastet werden kann, so ist eine thermische Überwachung des Einphasen-Synchronmotors erforderlich. Eine derartige thermische Überlastung kann beispielsweise durch einen Fehlerfall in Form einer falschen bzw. unzulässig starken Bestromung beispielsweise durch einen Kurzschluss in der Elektronik des Antriebssystems auftreten, zu welcher der Einphasen-Synchronmotor gehört. Wird eine thermische Überlastung des Einphasen-Synchronmotors erkannt, so wird dieser abgeschaltet, um eine Beschädigung des Einphasen-Synchronmotors zu vermeiden. Entsprechend ist ein derartiger Einphasen-Synchronmotor auf ein Überhitzen zu überwachen. Dies kann, zur Vermeidung von zusätzlichen Temperatursensoren und den damit verbundenen Kosten etc., mittels der Auswertung der Motorströme erfolgen.

Werden in einem Gerät mehrere derartige Einphasen-Synchronmotoren verwendet, beispielsweise in einer Waschmaschine ein erster Einphasen-Synchronmotor für die Umflutpumpe und ein zweiter Einphasen-Synchronmotor für die Laugenpumpe, so ist auch jeweils eine derartige thermische Überwachung pro Einphasen-Synchronmotor erforderlich. Entsprechend können die zusätzlichen thermischen Überwachungen bzw. die entsprechenden Elektroniken die Herstellungskosten hinsichtlich Material und Montageaufwand, den Platzbedarf im Gerät bzw. auf der Elektronik, den Stromverbrauch und bzw. oder die erzeugte Abwärme erhöhen.

Der Erfindung stellt sich somit das Problem, ein Antriebssystem der eingangs beschriebenen Art bereitzustellen, welches mehrere einphasige, Wechselstrommotoren mit einem geringeren elektronischen bzw. schaltungstechnischen Aufwand als bisher bekannt, insbesondere durch Auswertung der Motorströme im Betrieb, thermisch überwachen kann. Dies soll insbesondere kostengünstiger, bauraumsparender, energiesparender und bzw. oder mit einer geringeren Abwärme erfolgen können. Zumindest soll eine Alternative zu bekannten derartigen Antriebssystemen geschaffen werden.

Erfindungsgemäß wird dieses Problem durch ein Antriebssystem mit den Merkmalen des Patentanspruchs 1 sowie durch ein Haushaltsgerät mit den Merkmalen des Patentanspruchs 9 gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem ersten Motor, mit wenigstens einer ersten H-Brücke, welche ausgebildet ist, den ersten Motor zu betreiben, wobei die erste H-Brücke eine erste Halbbrücke mit einem ersten Messwiderstand und eine zweite Halbbrücke mit einem zweiten Messwiderstand aufweist, und mit einer Steuerungseinheit, welche ausgebildet ist, die Ströme des ersten Messwiderstands und des zweiten Messwiderstands hinsichtlich einer thermischen Belastung des ersten Motors auszuwerten.

Das Antriebssystem ist gekennzeichnet durch wenigstens einen zweiten Motor und wenigstens eine zweite H-Brücke, welche ausgebildet ist, den zweiten Motor zu betreiben, wobei die zweite H-Brücke die zweite Halbbrücke mit dem zweiten Messwiderstand und eine dritte Halbbrücke mit einem dritten Messwiderstand aufweist, wobei die Steuerungseinheit ferner ausgebildet ist, die Ströme des zweiten Messwiderstands und des dritten Messwiderstands hinsichtlich einer thermischen Belastung des zweiten Motors auszuwerten. Dies kann entsprechend den schaltungstechnischen Aufwand reduzieren, um zwei Motoren thermisch mittels Strommessung zu überwachen, da der zweite Messwiderstand der zweiten Halbbrücke sozusagen doppelt verwendet werden kann. Dies kann die Kosten hinsichtlich Material und Montage ebenso reduzieren wie den Platzbedarf, den Energieverbrauch und bzw. oder die Wärmeerzeugung.

Gemäß der Erfindung ist die Steuerungseinheit ferner ausgebildet, im Betrieb des ersten Motors
- den Verlauf des Stromes einer positiven Stromwelle über den zweiten Messwiderstand zu erfassen,
- den Verlauf des Stromes einer unmittelbar nachfolgenden negativen Stromwelle über den ersten Messwiderstand zu erfassen,
- die beiden Verläufe miteinander zu vergleichen und,
- im Falle einer Differenz zwischen den beiden Verläufen als Ergebnis des Vergleichens, einen Fehler des ersten Motors zu erkennen, vorzugsweise den ersten Motor abzuschalten.

Dies kann eine Möglichkeit darstellen, den ersten Motor thermisch mittels Strommessung zu überwachen.

Gemäß der Erfindung ist die Steuerungseinheit ferner ausgebildet, im Betrieb des zweiten Motors
- den Verlauf des Stromes einer positiven Stromwelle über den dritten Messwiderstand zu erfassen,
- den Verlauf des Stromes einer unmittelbar nachfolgenden negativen Stromwelle über den zweiten Messwiderstand zu erfassen,
- die beiden Verläufe miteinander zu vergleichen und,
- im Falle einer Differenz zwischen den beiden Verläufen als Ergebnis des Vergleichens, einen Fehler des zweiten Motors zu erkennen, vorzugsweise den zweiten Motor abzuschalten.

Dies kann eine Möglichkeit darstellen, den zweiten Motor thermisch mittels Strommessung zu überwachen.

Gemäß einem weiteren Aspekt der Erfindung ist die Steuerungseinheit ferner ausgebildet, im Betrieb eines der beiden Motoren
- den Verlauf des Stromes einer positiven oder einer negativen Stromwelle über einen der drei Messwiderstände des jeweiligen Motors zu erfassen,
- parallel hierzu den Strom über die beiden anderen Messwiderstände zu erfassen und
- im Falle eines von Null abweichenden Stroms über einen der beiden anderen Messwiderstände einen Fehler des jeweiligen Motors zu erkennen, vorzugsweise den jeweiligen Motor abzuschalten.

Dies kann eine zusätzliche oder alternative Möglichkeit darstellen, den jeweiligen Motor thermisch mittels Strommessung zu überwachen.

Gemäß einem weiteren Aspekt der Erfindung ist die Steuerungseinheit ausgebildet ist, die erste Halbbrücke, die zweite Halbbrücke und die dritte Halbbrücke zu betreiben. Somit kann auch hinsichtlich der Umsetzung der Steuerung der Halbbrücken bzw. der H-Brücken der Aufwand etc. reduziert werden, indem alle drei Halbbrücken von einer gemeinsamen Steuerungseinheit betrieben bzw. gesteuert werden können.

Gemäß einem weiteren Aspekt der Erfindung ist die Steuerungseinheit ausgebildet, entweder
- mittels der ersten Halbbrücke und der zweiten Halbbrücke die erste H-Brücke oder
- mittels der zweiten Halbbrücke und der dritten Halbbrücke die zweite H-Brücke
zu betreiben. Hierdurch kann ein Konflikt, für welchen der beiden Motoren die gemeinsame zweite Halbbrücke verwendet wird, vermieden werden.

Gemäß einem weiteren Aspekt der Erfindung weist das Antriebssystem einen Gleichrichter auf, welcher ausgebildet ist, eine Wechselspannung eines Spannungseingangs des Antriebssystems zu erhalten und eine Gleichspannung der ersten Halbbrücke, der zweiten Halbbrücke und der dritten Halbbrücke zur Verfügung zu stellen. Hierdurch kann eine Umsetzung des Antriebssystems an einer Wechselspannung erfolgen.

Gemäß einem weiteren Aspekt der Erfindung weist das Antriebssystem einen Glättungskondensator auf, welcher ausgebildet ist, die Gleichspannung des Ausgangs des Gleichrichters zu glätten. Hierdurch kann eine Restwelligkeit der gleichgerichteten Wechselspannung reduziert werden.

Gemäß einem weiteren Aspekt der Erfindung sind der erste Motor und der zweite Motor einphasige Wechselstrommotoren, vorzugsweise einphasige Synchronmotoren. Dies kann die Umsetzung des Antriebssystems mit derartigen Motoren ermöglichen.

Die vorliegende Erfindung betrifft auch ein Haushaltsgerät, vorzugsweise eine Waschmaschine oder einen Geschirrspüler, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

Ein Ausführungsbeispiel der Erfindung ist in den Zeichnungen rein schematisch dargestellt und wird nachfolgend näher beschrieben. Es zeigt
- Figur 1: ein Schaltungsbild eines bekannten Antriebssystems mit einem Motor und mit einer H-Brücke;
- Figur 2: ein Strom-Zeit-Diagramm eines normalen Betriebszustands; und
- Figur 3: ein Schaltungsbild eines erfindungsgemäßen Antriebssystems mit zwei Motoren und mit zwei H-Brücken mit einem gemeinsamen Messwiderstand.

Es ist bekannt, ein Antriebssystem 1 über einen Spannungseingang 10 an einer Wechselspannung zu betreiben, indem die Wechselspannung des Spannungseingangs 10 über einen Gleichrichter 11 in eine Gleichspannung gewandelt und dann mittels eines Glättungskondensators C geglättet wird.

Die geglättete Gleichspannung wird nun parallel an eine erste Halbbrücke 12 und an eine zweite Halbbrücke 13 gelegt, welche gemeinsam eine erste H-Brücke 15 bilden. Die erste Halbbrücke 12 weist einen ersten Leistungshalbleiter T1, einen zweiten Leistungshalbleiter T2, einen ersten Treiber D1 und einen ersten Messwiderstand R1 als ersten Shunt R1 auf. Die zweite Halbbrücke 13 weist einen dritten Leistungshalbleiter T3, einen vierten Leistungshalbleiter T4, einen zweiten Treiber D2 und einen zweiten Messwiderstand R2 als zweiten Shunt R2 auf. Zwischen den beiden Halbbrücken 12, 13 ist ein erster Motor M1 angeordnet, welcher von der ersten H-Brücke 15 betrieben werden kann.

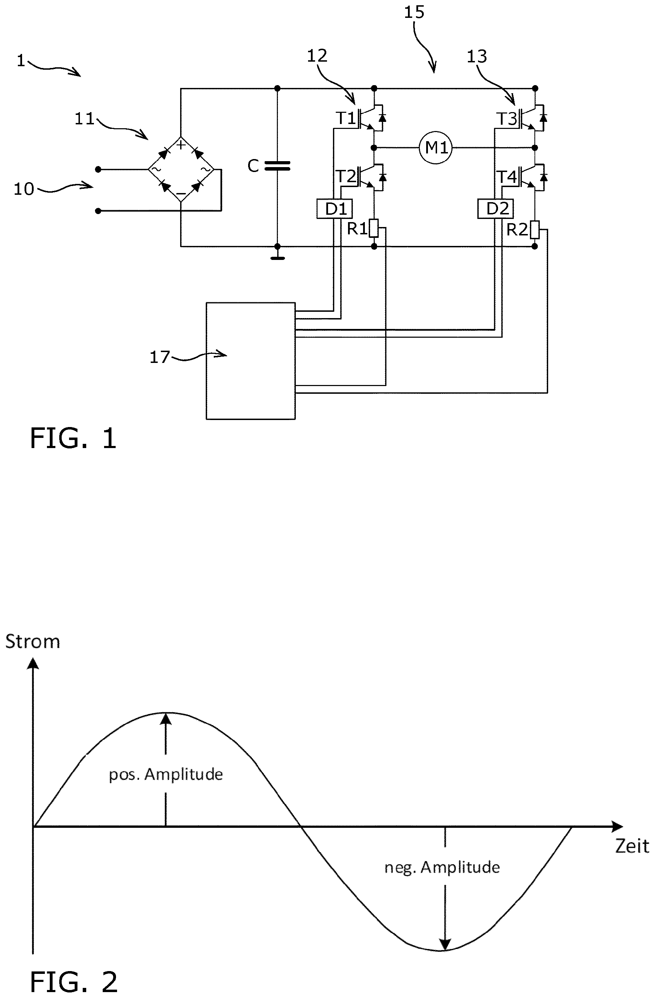

Hierzu ist eine Steuerungseinheit 17 in Form eines Rechners 17 über die beiden Treiber D1, D2 jeweils mit den vier Leistungshalbleitern T1-T4 verbunden. Auch sind die beiden Messwiderstände R1, R2 mit der Steuerungseinheit 17 verbunden, so dass im Betrieb die Ströme im ersten Motor M1 erfasst und der erste Motor M1 hierauf basierend von der Steuerungseinheit 17 geregelt betrieben werden kann, siehe Figur 1. Der erste Motor M1 ist ein einphasiger Wechselstrommotor bzw. ein einphasiger Synchronmotor, welcher beispielsweise in einem Haushaltsgerät wie insbesondere in einer Waschmaschine oder in einem Geschirrspüler als Umflutpumpenmotor oder als Laugenpumpenmotor eingesetzt werden kann. Der erste Motor M1 wird mit dem Gleichstrom ausgerichtet und dann mit immer größer werdender Frequenz hochgefahren, bis der erste Motor M1 im geregelten Betrieb läuft. Über die Frequenz kann seitens der Steuerungseinheit 17 die Drehzahl des ersten Motors M1 angepasst werden.

Der erste Motor M1 ist thermisch nicht eigensicher, d.h. wenn im Fehlerfall die volle Busspannung von beispielsweise +300 V am ersten Motor M1 anliegt, kann der erste Motor M1 überhitzen, weil der Wicklungswiderstand nicht sehr groß ist. Aus diesem Grund erfolgt eine thermische Überwachung des ersten Motors M1 durch die Steuerungseinheit 17, welche auf den Strömen im ersten Motor M1 beruht, welche über die beiden Messwiderstände R1, R2 von der Steuerungseinheit 17 erfasst werden.

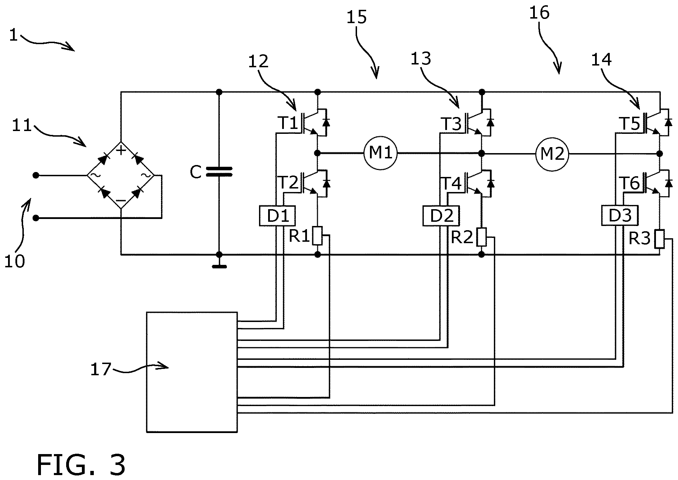

Um nun den schaltungstechnischen Aufwand sowohl zum Betrieb als auch zur thermischen Überwachung mittels der Motorströme wenigstens eines zweiten Motors M2 in demselben Haushaltsgerät geringzuhalten, ohne die Funktionen bzw. ohne die Nutzungsmöglichkeiten einzuschränken, wird erfindungsgemäß der zweite Motor M2 mit einer zweiten H-Brücke 16 seitens derselben Steuerungseinheit 17 betrieben, wobei die zweite H-Brücke 16 ebenfalls die zweite Halbbrücke 13 und zusätzlich eine weitere dritte Halbbrücke 14 verwendet, welche ihrerseits einen fünften Leistungshalbleiter T5, einen sechsten Leistungshalbleiter T6, einen dritten Treiber D3 und einen dritten Messwiderstand R3 als dritten Shunt R3 aufweist, siehe Figur 3. Entsprechend kann auch der zweite Motor M2 seitens der Steuerungseinheit 17 geregelt, basierend auf den Strömen im Betrieb, betrieben werden.

Die zweite Halbbrücke 13 wird somit entweder von der ersten H-Brücke 15 zum Betreiben des ersten Motors M1 oder von der zweiten H-Brücke 16 zum Betreiben des zweiten Motors M2 verwendet. Dies kann nicht nur den schaltungstechnischen Aufwand zum Betrieb des zweiten Motors M2 geringhalten, sondern auch die Herstellungskosten, den Platzbedarf, den Energieverbrauch sowie die Wärmeabgabe des Antriebssystems 1.

Dies gilt ebenso für die thermische Überwachung des zweiten Motors M2 mittels der Motorströme, welche seitens der Steuerungseinheit 17 für den zweiten Motor M2 durch Verwendung des zweiten Messwiderstands R2, welcher ferner für die thermische Überwachung des ersten Motors M1 verwendet werden kann, und durch den dritten Messwiderstand R3 erfolgen kann. Somit kann auch für die thermische Überwachung beider Motoren M1, M2 der schaltungstechnische Aufwand, die Herstellungskosten, der Platzbedarf, der Energieverbrauch sowie die Wärmeabgabe des Antriebssystems 1 geringgehalten werden, indem der zweite Messwiderstand R2 doppelt verwendet wird.

Die thermische Überwachung beider Motoren M1, M2 kann basierend auf einer Strom-ZeitÜberwachung erfolgen. Hierzu ist es bekannt, den Strom des jeweiligen Motors M1, M2 zu messen und seitens der Steuerungseinheit 17 dahingehend auszuwerten, wie lange dieser Strom fließt bzw. fließen darf. Es sind Zusammenhänge zwischen Strom und Zeit bekannt, wonach kleine Ströme unendlich lang fließen dürfen, weil hierdurch der jeweilige Motor M1, M2 nicht zu warm wird. Höhere Ströme dürfen nur eine bestimmte Zeit lang fließen. Ganz hohe Ströme dürfen nur sehr kurz fließen. Wenn der Strom zu lange fließt, muss der jeweilige Motor M1, M1 abgeschaltet werden.

Sind die beiden Motoren M1, M2 jedoch sehr unterschiedlich in ihrer Konstruktion, Größe, Leistungsaufnahme etc., so kann einer der beiden Motoren M1, M2 viel Strom vertragen, der anderen der beiden Motoren M1, M2 im Gegensatz dazu nur sehr wenig.

Eine thermische Überwachung muss auch im Fehlerfall funktionieren, um verlässlich zu sein. Somit muss seitens der thermischen Überwachung der Steuerungseinheit 17 ein auftretender Fehler des Antriebssystems 1 erkannt und der jeweilige Motor M1, M2 abgeschaltet werden können. Ein derartiger Fehler kann dadurch auftreten, dass einer der Leistungshalbleiter T1-T6 kaputt ist, z.B. durch einen Kurzschluss oder durch eine Unterbrechung. Auch kann die Strommessung in einem der drei Zweige bzw. über einen der drei Messwiderstände R1-R3 nicht funktioniert oder falsche Werte liefern. Ferner kann die Steuerungseinheit 17 defekt sein und den jeweiligen Motor M1, M2 mit einem zu hohen Strom ansteuern.

Erfindungsgemäß kann eine thermische Überwachung beider Motoren M1, M2 nicht nur mit vergleichsweise geringem schaltungstechnischen Aufwand etc., wie zuvor bereits beschrieben, sondern zusätzlich unter Fehlerbedingungen ermöglicht werden, ohne die thermische Überwachung redundant zu verwenden, d.h. für jeden Motor M1, M2 doppelt auszulegen. Dies erfolgt basierend auf der Strommessung des jeweiligen im Betrieb befindlichen Motors M1, M2 unter der Voraussetzung, dass der tatsächlich anliegende jeweilige Strom richtig gemessen wird.

Der Strom fließt dabei in unterschiedlicher Richtung durch den jeweiligen Motor M1, M2. Dabei ist die positive Stromwelle im Normalfall gleich der negativen Stromwelle, siehe Figur 2.

In der positiven Stromwelle fließt der Strom des zweiten Motors M2 über den dritten Leistungshalbleiter T3 durch die Statorwicklungen des zweiten Motors M2 zu dem sechsten Leistungshalbleiter T6 und dann über den dritten Messwiderstand R3, wo der Strom der positiven Stromwelle von der Steuerungseinheit 17 erfasst werden kann. Der Strom über den ersten Messwiderstand R1 und über den zweiten Messwiderstand R2 ist in diesem Zeitraum der positiven Stromwelle des zweiten Motors M2 Null.

In der negativen Stromwelle fließt der Strom des zweiten Motors M2 über den vierten Leistungshalbleiter T4 in der entgegengesetzten Richtung durch die Statorwicklungen des zweiten Motors M2 zu dem fünften Leistungshalbleiter T5 und dann über den zweiten Messwiderstand R2, wo der Strom der negativen Stromwelle von der Steuerungseinheit 17 erfasst werden kann. Der Strom über den ersten Messwiderstand R1 und über den dritten Messwiderstand R3 ist in diesem Zeitraum der negativen Stromwelle des zweiten Motors M2 Null.

Auf diese Weise können die Ströme in der positiven und in der negativen Halbwelle des Stromes des zweiten Motors M2 seitens der Steuerungseinheit 17 gemessen und miteinander verglichen werden. Die beiden Stromhalbwellen müssen normalerweise gleich sein. Wenn dies nicht der Fall ist, so liegt irgendein Fehler im Antriebssystem 1 vor, z. B. ist die Strommessung über den zweiten Messwiderstand R2 defekt. Dies kann somit erkannt und durch Abschaltung des zweiten Motors M2 hierauf seitens der Steuerungseinheit 17 reagiert werden. Dies gilt analog für den ersten Motor M1.

Auch kann seitens der Steuerungseinheit 17 erkannt werden, dass der Strom über einen der Messwiderstände R1-R3 nicht Null ist, obwohl er dies zu diesem Zeitpunkt sein sollte. Dies kann ebenfalls seitens der Steuerungseinheit 17 zur Erkennung eines Fehlers genutzt werden.

Erfindungsgemäß kann auf diese Art und Weise eine sichere Strommessung erfolgen und eine thermische Überwachung beider Motoren M1, M2 unter Fehlerbedingungen realisiert werden. Dabei müssen lediglich drei Stromzweige, d.h. die drei Messwiderstände R1-R3, seitens der Steuerungseinheit 17 gemessen und ausgewertet werden und es ist keinerlei Redundanz erforderlich.

Beim Messen und Vergleichen des Stromes kann zu beachten sein, dass die sechs Leistungshalbleiter T1-T6 mittels Pulsweitenmodulation (PWM) betrieben werden, um dem jeweiligen Motor M1, M2 eine Sinusspannung zuvor Verfügung zu stellen, welche aus der Gleichspannung des Gleichrichters 11 erzeugt wird. Dadurch ergibt sich immer innerhalb einer Periode eine Zeit des Motorbestromens, in welcher der Strom des zweiten Motors M2 über den dritten Leistungshalbleiter T3 durch die Statorwicklungen des zweiten Motors M2 zu dem sechsten Leistungshalbleiter T6 und dann über den dritten Messwiderstand R3 fließt, und eine Zeit des so genannten Freilaufs, in welcher der Strom des zweiten Motors M2 über den vierten Leistungshalbleiter T4 durch die Statorwicklungen des zweiten Motors M2 zu dem sechsten Leistungshalbleiter T6 und dann über den dritten Messwiderstand R3 und über den zweiten Messwiderstand R2 im Kreis fließt.

In beiden Zuständen des Bestromens und des Freilaufs kann der Strom beispielsweise über den Messwiderstand R3 für den zweiten Motor M2 gemessen werden. Wenn der Freilauf über den dritten Leistungshalbleiter T3 und über den fünften Leistungshalbleiter T5 stattfindet, so kann der Strom nicht zu jeder Zeit durch den Messwiderstand R3 gemessen werden. Dann muss die Strommessung seitens der Steuerungseinheit 17 mit der PWM synchronisiert werden. Die zuvor beschriebenen Möglichkeiten der Messung und Auswertung der erfassten Ströme bleiben aber wie zuvor beschrieben bestehen.

Eine weitere Möglichkeit der Validierung der Strommessung kann darin bestehen, beispielsweise bei Freilauf über den vierten Leistungshalbleiter T4 und über den sechsten Leistungshalbleiter T6 die Ströme über den zweiten Messwiderstand R2 und über den dritten Messwiderstand R3 zu messen. Da die beiden Messzweige des zweiten Messwiderstands R2 und des dritten Messwiderstands R3 unabhängig von aneinander sind, können beide Ströme mitaneinander verglichen und validiert werden, d.h. beide Ströme müssen den gleichen Wert aufweisen. Dazu muss allerdings auf den richtigen Abtastzeitpunkt geachtet werden. Es müssen zum Messzeitpunkt beide Low-Side Schalter eingeschaltet sein.

### Bezugszeichenliste (Bestandteil der Beschreibung)

- C: Glättungskondensator
- D1: erster Treiber
- D2: zweiter Treiber
- D3: dritter Treiber
- M1: erster Motor
- M2: zweiter Motor
- R1-R3: Messwiderstände; Shunts
- T1-T6: Leistungshalbleiter

- 1: Antriebssystem
- 10: Spannungseingang
- 11: Gleichrichter
- 12: erste Halbbrücke
- 13: zweite Halbbrücke
- 14: dritte Halbbrücke
- 15: erste H-Brücke
- 16: zweite H-Brücke
- 17: Steuerungseinheit; Rechner

## Patentansprüche

1. Antriebssystem (1)
mit wenigstens einem ersten Motor (M1),
mit wenigstens einer ersten H-Brücke (15), welche ausgebildet ist, den ersten Motor (M1) zu betreiben,
wobei die erste H-Brücke (15) eine erste Halbbrücke (12) mit einem ersten Messwiderstand (R1) und eine zweite Halbbrücke (13) mit einem zweiten Messwiderstand (R2) aufweist, und
mit einer Steuerungseinheit (17), welche ausgebildet ist, die Ströme des ersten Messwiderstands (R1) und des zweiten Messwiderstands (R2) hinsichtlich einer thermischen Belastung des ersten Motors (M1) auszuwerten,
mit
wenigstens einem zweiten Motor (M2) und
wenigstens einer zweiten H-Brücke (16), welche ausgebildet ist, den zweiten Motor (M2) zu betreiben,
wobei die zweite H-Brücke (16) die zweite Halbbrücke (13) mit dem zweiten Messwiderstand (R2) und eine dritte Halbbrücke (14) mit einem dritten Messwiderstand (R3) aufweist,
wobei die Steuerungseinheit (17) ferner ausgebildet ist, die Ströme des zweiten Messwiderstands (R2) und des dritten Messwiderstands (R3) hinsichtlich einer thermischen Belastung des zweiten Motors (M2) auszuwerten,
**dadurch gekennzeichnet, dass**
die Steuerungseinheit (17) ferner ausgebildet ist, im Betrieb des ersten Motors (M1)
• den Verlauf des Stromes einer positiven Stromwelle über den zweiten Messwiderstand (R2) zu erfassen,
• den Verlauf des Stromes einer unmittelbar nachfolgenden negativen Stromwelle über den ersten Messwiderstand (R1) zu erfassen,
• die beiden Verläufe miteinander zu vergleichen und,
• im Falle einer Differenz zwischen den beiden Verläufen als Ergebnis des Vergleichens, einen Fehler des ersten Motors (M1) zu erkennen, vorzugsweise den ersten Motor (M1) abzuschalten.

2. Antriebssystem (1) nach Anspruch 1, **dadurch gekennzeichnet, dass**
die Steuerungseinheit (17) ferner ausgebildet ist, im Betrieb des zweiten Motors (M2)
• den Verlauf des Stromes einer positiven Stromwelle über den dritten Messwiderstand (R3) zu erfassen,
• den Verlauf des Stromes einer unmittelbar nachfolgenden negativen Stromwelle über den zweiten Messwiderstand (R2) zu erfassen,
• die beiden Verläufe miteinander zu vergleichen und,
• im Falle einer Differenz zwischen den beiden Verläufen als Ergebnis des Vergleichens, einen Fehler des zweiten Motors (M2) zu erkennen, vorzugsweise den zweiten Motor (M2) abzuschalten.

3. Antriebssystem (1) nach einem der vorangehenden Ansprüche, **dadurch gekennzeichnet, dass**
die Steuerungseinheit (17) ferner ausgebildet ist, im Betrieb nur eines der beiden Motoren (M1; M2)
• den Verlauf des Stromes einer positiven oder einer negativen Stromwelle über einen der drei Messwiderstände (R1; R2; R3) des jeweiligen Motors (M1; M2) zu erfassen,
• parallel hierzu den Strom über die beiden anderen Messwiderstände (R1; R2; R3) zu erfassen und
• im Falle eines von Null abweichenden Stroms über einen der beiden anderen Messwiderstände (R1; R2; R3) einen Fehler des jeweiligen Motors (M1; M2) zu erkennen, vorzugsweise den jeweiligen Motor (M1; M2) abzuschalten.

4. Antriebssystem (1) nach einem der vorangehenden Ansprüche, **dadurch gekennzeichnet, dass**
die Steuerungseinheit (17) ausgebildet ist, die erste Halbbrücke (12), die zweite Halbbrücke (13) und die dritte Halbbrücke (14) zu betreiben.

5. Antriebssystem (1) nach Anspruch 4, **dadurch gekennzeichnet, dass**
die Steuerungseinheit (17) ausgebildet ist, entweder
• mittels der ersten Halbbrücke (12) und der zweiten Halbbrücke (13) die erste H-Brücke (15) oder
• mittels der zweiten Halbbrücke (13) und der dritten Halbbrücke (14) die zweite H-Brücke (16)
zu betreiben.

6. Antriebssystem (1) nach einem der vorangehenden Ansprüche, **gekennzeichnet durch** einen Gleichrichter (11), welcher ausgebildet ist, eine Wechselspannung eines Spannungseingangs (10) des Antriebssystems (1) zu erhalten und eine Gleichspannung der ersten Halbbrücke (12), der zweiten Halbbrücke (13) und der dritten Halbbrücke (14) zur Verfügung zu stellen.

7. Antriebssystem (1) nach Anspruch 6, **gekennzeichnet durch**
einen Glättungskondensator (C), welcher ausgebildet ist, die Gleichspannung des Ausgangs des Gleichrichters (11) zu glätten.

8. Antriebssystem (1) nach einem der vorangehenden Ansprüche, **dadurch gekennzeichnet, dass**
der erste Motor (M1) und der zweite Motor (M2) einphasige Wechselstrommotoren (M1, M2), vorzugsweise einphasige Synchronmotoren (M1, M2), sind.

9. Haushaltsgerät, vorzugsweise Waschmaschine oder Geschirrspüler,
mit wenigstens einem Antriebssystem (1) nach einem der vorangehenden Ansprüche.

## Claims

1. Drive system (1)
comprising at least one first motor (M1),
comprising at least one first H-bridge (15) which is designed to operate the first motor (M1),
the first H-bridge (15) comprising a first half-bridge (12) with a first measuring resistor (R1) and a second half-bridge (13) with a second measuring resistor (R2), and
comprising a control unit (17) which is designed to evaluate the currents of the first measuring resistor (R1) and the second measuring resistor (R2) with regard to a thermal load of the first motor (M1),
comprising
at least one second motor (M2) and
at least one second H-bridge (16) which is designed to operate the second motor (M2),
the second H-bridge (16) comprising the second half-bridge (13) with the second measuring resistor (R2) and a third half-bridge (14) with a third measuring resistor (R3),
the control unit (17) being further designed to evaluate the currents of the second measuring resistor (R2) and the third measuring resistor (R3) with regard to a thermal load of the second motor (M2),
**characterised in that**
the control unit (17) is further designed, during operation of the first motor (M1),
• to record the course of the current of a positive current wave across the second measuring resistor (R2),
• to record the course of the current of an immediately following negative current wave across the first measuring resistor (R1),
• to compare the two courses and,
• in the event of a difference between the two courses as a result of the comparison, to detect a fault of the first motor (M1), preferably to switch off the first motor (M1).

2. Drive system (1) according to claim 1, **characterised in that**
the control unit (17) is further designed, during operation of the second motor (M2),
• to record the course of the current of a positive current wave across the third measuring resistor (R3),
• to record the course of the current of an immediately following negative current wave across the second measuring resistor (R2),
• to compare the two courses and,
• in the event of a difference between the two courses as a result of the comparison, to detect a fault of the second motor (M2), preferably to switch off the second motor (M2).

3. Drive system (1) according to either of the preceding claims, **characterised in that**
the control unit (17) is further designed, during operation of only one of the two motors (M1; M2),
• to record the course of the current of a positive or a negative current wave across one of the three measuring resistors (R1; R2; R3) of the relevant motor (M1; M2),
• to record the current in parallel across the other two measuring resistors (R1; R2; R3) and
• in the event of a current deviating from zero across one of the other two measuring resistors (R1; R2; R3), to detect a fault in the relevant motor (M1; M2), preferably to switch off the relevant motor (M1; M2).

4. Drive system (1) according to any of the preceding claims,
**characterised in that**
the control unit (17) is designed to operate the first half-bridge (12), the second half-bridge (13) and the third half-bridge (14).

5. Drive system (1) according to claim 4, **characterised in that**
the control unit (17) is designed to operate either
• the first H-bridge (15), by means of the first half-bridge (12) and the second half-bridge (13), or
• the second H-bridge (16), by means of the second half-bridge (13) and the third half-bridge (14).

6. Drive system (1) according to any of the preceding claims, **characterised by** a rectifier (11) which is designed to receive an alternating voltage from a voltage input (10) of the drive system (1) and to provide a direct voltage to the first half-bridge (12), the second half-bridge (13) and the third half-bridge (14).

7. Drive system (1) according to claim 6, **characterised by**
a smoothing capacitor (C) which is designed to smooth the direct voltage of the output of the rectifier (11).

8. Drive system (1) according to any of the preceding claims,
**characterised in that**
the first motor (M1) and the second motor (M2) are single-phase alternating current motors (M1, M2), preferably single-phase synchronous motors (M1, M2).

9. Household appliance, preferably washing machine or dishwasher,
comprising at least one drive system (1) according to any of the preceding claims.

## Revendications

1. Système d'entraînement (1)
comportant au moins un premier moteur (M1),
comportant au moins un premier pont en H (15) qui est configuré pour faire fonctionner le premier moteur (M1),
dans lequel le premier pont en H (15) présente un premier demi-pont (12) comportant une première résistance de mesure (R1) et un deuxième demi-pont (13) comportant une deuxième résistance de mesure (R2), et
comportant une unité de commande (17) qui est configurée pour évaluer les courants de la première résistance de mesure (R1) et de la deuxième résistance de mesure (R2) en ce qui concerne une charge thermique du premier moteur (M1),
comportant
au moins un second moteur (M2) et
au moins un second pont en H (16) qui est configuré pour faire fonctionner le second moteur (M2),
dans lequel le second pont en H (16) comprend le deuxième demi-pont (13) comportant la deuxième résistance de mesure (R2) et un troisième demi-pont (14) comportant une troisième résistance de mesure (R3),
dans lequel l'unité de commande (17) est en outre configurée pour évaluer les courants de la deuxième résistance de mesure (R2) et de la troisième résistance de mesure (R3) en ce qui concerne une charge thermique du second moteur (M2),
**caractérisé en ce que**
l'unité de commande (17) est en outre configurée pour, lors du fonctionnement du premier moteur (M1),
• détecter l'évolution du courant d'une onde de courant positive à travers la deuxième résistance de mesure (R2),
• détecter l'évolution du courant d'une onde de courant négative immédiatement consécutive à travers la première résistance de mesure (R1),
• comparer les deux évolutions entre elles et,
• en cas de différence entre les deux évolutions en tant que résultat de la comparaison, reconnaître un défaut du premier moteur (M1), de préférence arrêter le premier moteur (M1).

2. Système d'entraînement (1) selon la revendication 1, **caractérisé en ce que**
l'unité de commande (17) est en outre configurée pour, lors du fonctionnement du second moteur (M2),
• détecter l'évolution du courant d'une onde de courant positive à travers la troisième résistance de mesure (R3),
• détecter l'évolution du courant d'une onde de courant négative immédiatement consécutive à travers la deuxième résistance de mesure (R2),
• comparer les deux évolutions entre elles et,
• en cas de différence entre les deux évolutions en tant que résultat de la comparaison, reconnaître un défaut du second moteur (M2), de préférence arrêter le second moteur (M2).

3. Système d'entraînement (1) selon l'une des revendications précédentes, **caractérisé en ce que**
l'unité de commande (17) est en outre configurée pour, lors du fonctionnement de seulement l'un des deux moteurs (M1 ; M2),
• détecter l'évolution du courant d'une onde de courant positive ou négative à travers l'une des trois résistances de mesure (R1 ; R2 ; R3) du moteur (M1 ; M2) respectif,
• mesurer en parallèle le courant à travers les deux autres résistances de mesure (R1 ; R2 ; R3) et
• dans le cas d'un courant non nul à travers l'une des deux autres résistances de mesure (R1 ; R2 ; R3), reconnaître un défaut du moteur (M1 ; M2) respectif, de préférence arrêter le moteur (M1 ; M2) respectif.

4. Système d'entraînement (1) selon l'une des revendications précédentes, **caractérisé en ce que**
l'unité de commande (17) est configurée pour faire fonctionner le premier demi-pont (12), le deuxième demi-pont (13) et le troisième demi-pont (14).

5. Système d'entraînement (1) selon la revendication 4,
**caractérisée en ce que**
l'unité de commande (17) est configurée pour faire fonctionner
• soit le premier pont en H (15) au moyen du premier demi-pont (12) et du deuxième demi-pont (13),
• soit le second pont en H (16) au moyen du deuxième demi-pont (13) et du troisième demi-pont (14).

6. Système d'entraînement (1) selon l'une des revendications précédentes, **caractérisé par** un redresseur (11) qui est configuré pour recevoir une tension alternative d'une entrée de tension (10) du système d'entraînement (1) et pour mettre à disposition une tension continue du premier demi-pont (12), du deuxième demi-pont (13) et du troisième demi-pont (14).

7. Système d'entraînement (1) selon la revendication 6, **caractérisé par**
un condensateur de lissage (C) qui est configuré pour lisser la tension continue de la sortie du redresseur (11).

8. Système d'entraînement (1) selon l'une des revendications précédentes, **caractérisé en ce que**
le premier moteur (M1) et le second moteur (M2) sont des moteurs à courant alternatif monophasés (M1, M2), de préférence des moteurs synchrones monophasés (M1, M2).

9. Appareil électroménager, de préférence lave-linge ou lave-vaisselle,
comportant au moins un système d'entraînement (1) selon l'une des revendications précédentes.
